(19) Europäisches Patentamt / European Patent Office / Office européen des brevets

(11) **EP 4 205 872 A1**

(12) **DEMANDE DE BREVET EUROPEEN**

(43) Date de publication:
**05.07.2023 Bulletin 2023/27**

(21) Numéro de dépôt: **22216321.4**

(22) Date de dépôt: **23.12.2022**

(51) Classification Internationale des Brevets (IPC):
**B09B 3/70** *(2022.01)*   **B09B 3/27** *(2022.01)*
**B09B 101/90** *(2022.01)*

(52) Classification Coopérative des Brevets (CPC):
**B09B 3/27; B09B 3/70;** B09B 2101/90;
B09C 2101/00

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **03.01.2022 FR 2200008**

(71) Demandeur: **EQIOM**
**92400 Courbevoie (FR)**

(72) Inventeurs:
• **MAMINDY-PAJANY, Yannick**
  **06200 Nice (FR)**
• **NADAH, Jaouad**
  **13790 Rousset (FR)**

(74) Mandataire: **Lavialle, Bruno François Stéphane et al**
**Cabinet Boettcher**
**5 rue de Vienne**
**75008 Paris (FR)**

(54) **PRODUIT DE GENIE CIVIL POUR L'INERTAGE DE SUBSTRATS**

(57) La présente invention concerne un produit de génie civil d'inertage de substrats comprenant au moins un liant hydraulique géotechnique et un additif de sels de baryum ou d'aluminium dans des proportions comprises entre 5 et 50% en masse dudit produit. De manière privilégiée, le liant hydraulique géotechnqiue du produit objet de l'invention comprend au moins 15% de Clinker (Portland) et l'additif est à base de sels de baryum ou de sels d'aluminium.

Fig. 6

EP 4 205 872 A1

## Description

La présente invention concerne le domaine de la gestion des déchets, du génie civil, notamment celui de la réutilisation de substrats pollués dans les aménagements de génie civil.

ARRIERE PLAN DE L'INVENTION

Le devenir des sols et des déchets minéraux non inertes issus de chantiers d'excavation ou provenant d'autres typologies de chantiers implique la prise en compte d'enjeux environnementaux et économiques majeurs que ce soit dans des perspectives de réutilisation de ces déchets ou du simple stockage de ceux-ci. En effet, ces substrats sont très souvent pollués, leur réutilisation dans une perspective d'économie circulaire ou leur élimination répond à des critères environnementaux strictement définis réglementairement et nécessite un traitement préalable desdits substrats en vue de les rendre inertes et donc moins polluants. En particulier, le relargage par les substrats des substances chimiques problématiques pour l'environnement, notamment les sulfates, doit être maitrisé avant toute opération de valorisation (technique routière, matériaux de construction, reconstitution de sols, etc.) ou d'élimination en installations de stockage de déchets.

Pour ce faire, il existe actuellement plusieurs méthodes de traitement de substrats basées sur des principes biologiques, physiques ou chimiques. Ces traitements visent à réduire voire supprimer la lixiviation des sulfates dans les sols et déchets pollués, c'est-à-dire le transfert des sulfates dissous dans les eaux de pluie ou de ruissellement vers les nappes phréatiques, ce afin d'en éviter la contamination.

Parmi les méthodes physico-chimiques les plus répandues, on peut citer l'utilisation de liants hydrauliques géotechniques avec des objectifs de réutilisation des substrats pollués (Bellagh K. - Valorisation d'un sol urbain dans le domaine routier: Mobilité des polluants dans les sols traités et/ou compactés.-Géotechnique. Université Paris-Est, 2017 ; Colas J. - Etude de la valorisation des déblais de chantiers de tunnels en granulats et béton. Université Paris-Est, 2012) ou d'élimination de la pollution (FR-A-2 990 431 déposé le 14 mai 2012 ; FR-A-3 056 930 déposé le 4 octobre 2016 ; Trincal et al.,2018 - Use of hydraulic binders for reducing sulphate leaching : application to gypsiferous soil sampled in Ile-de-France region (France) - Environmental Science and Pollution Research 25, 22977-22997).

Néanmoins, l'efficacité des liants hydrauliques géotechniques ou liants hydrauliques d'inertage utilisés se montre extrêmement variable selon la nature et la composition géologique des substrats traités sans pour autant atteindre les objectifs d'inertage des sulfates prévus par la législation et ce, à des dosages économiquement viables.

Ainsi, il n'existe pas à ce jour de solution de traitement par des liants hydrauliques d'inertage de sols pollués aux sulfates qui soient efficaces quelle que soit la nature des sols (ou substrats) à traiter, quelle que soit la quantité de sulfates à piéger présents dans lesdits substrats et qui soit économiquement viable et efficace dans le temps.

OBJET DE L'INVENTION

L'invention a notamment pour but de proposer un produit d'inertage de substrats à base de liants hydrauliques géotechniques qui puisse être utilisée efficacement pour traiter n'importe quel substrat pollué par des sulfates à un coût acceptable par les opérateurs.

RESUME DE L'INVENTION

A cet effet, les inventeurs ont mis au point un produit d'inertage de substrats comprenant au moins :

- un liant hydraulique géotechnique et,
- un additif de sels de baryum ou d'aluminium dans des proportions comprises entre 5 et 50% en masse dudit produit.

De manière privilégiée, le liant hydraulique géotechnique du produit d'inertage objet de l'invention comprend au moins 15% de Clinker (Portland). De préférence, il comprend au moins 20%, au moins 30%, au moins 40%, au moins 50% de Clinker et de manière tout à fait préférentielle au moins 65% de Clinker. A titre d'exemple le liant hydraulique qui peut être utilisé dans le produit d'inertage de l'invention peut être un liant hydraulique commercialisé par la société Eqiom sous la marque Inercem P, composé principalement d'un mélange de Clinker (Portland) et de laitier de haut fourneau.

Outre le liant hydraulique géotechnique mentionné, le produit d'inertage de l'invention comprend également un additif à base de sels de baryum ou à base de sels d'aluminium, de préférence l'additif est à base de sels de baryum.

La présente invention concerne également un procédé d'inertage de substrat pollué par piégeage des ions sulfates présents dans le substrat à traiter par adjonction du produit d'inertage de l'invention dans des proportions de 5 à 10% en masse de substrat à traiter.

L'invention concerne également un procédé pour inerter des substrats destinés à être stockés et dépollués in situ, comprenant les étapes de :

a. Evaluer la quantité de sulfates lixiviables du substrat à traiter par essais de lixiviation (la quantité de sulfates lixiviables est exprimée en milligrammes de sulfates lixiviables par kilogramme de matière sèche de substrat à traiter(mg/kg)) ;

b. Etablir une gamme d'échantillons, chaque échantillon étant constitué d'un mélange homogène substrat à traiter / produit d'inertage avec une proportion de produit d'inertage entre 5 et 10% en masse du substrat à traiter selon les échantillons ;

c. Effectuer des essais de lixiviation sur cette gamme d'échantillons ;

d. Déterminer la quantité de produit d'inertage objet de l'invention nécessaire au traitement du substrat en fonction des résultats obtenus à l'étape c pour être compatible avec une valeur de référence de quantité de sulfates lixiviables acceptable. Il est précisé que la valeur de référence est définie par une norme ou déterminée par cahier des charges ;

e.Mélanger de manière homogène la quantité de produit d'inertage déterminée à l'étape d au substrat à traiter.

L'invention concerne également un procédé pour inerter des substrats destinés à être utilisés en techniques routières, comprenant les étapes suivantes :

a.Evaluer la quantité de sulfates lixiviables du substrat à traiter par essais de lixiviation (en mg de sulfates lixiviables /kg de de matière sèche de substrat) ;

b. Etablir une gamme d'échantillons, chaque échantillon étant constitué d'un mélange homogène substrat à traiter / produit d'inertage avec une proportion de produit d'inertage comprise entre 5 et 10% en masse du substrat à traiter selon les échantillons ;

c. Effectuer des essais de lixiviation sur cette gamme d'échantillons ;

d. Déterminer le dosage d1 du produit d'inertage objet de l'invention nécessaire au traitement du substrat afin de réduire la quantité de sulfates lixiviables pour atteindre une valeur de référence de quantité de sulfates lixiviables. Le dosage d1 est exprimé en pourcentage de masse de matière sèche de substrat à traiter. Il est précisé que la valeur de référence est définie par une norme ou déterminée par cahier des charges ;

e. Effectuer des tests de performances mécaniques sur cette même gamme d'échantillons ;

f. Déterminer le dosage d2 du produit d'inertage objet de l'invention nécessaire au traitement du substrat afin d'obtenir les performances mécaniques attendues. Le dosage d2 est exprimé en pourcentage de masse de substrat à traiter ;

g.Déterminer la valeur d selon les formules suivantes :

d=d1 si d1>d2
d=d2 si d1<d2 ;

h. Calculer la quantité Q de produit d'inertage à épandre selon la formule suivante :

$$Q(kg/m^2) = e(m) \times \rho_d(t/m^3) \times \frac{1000 \times d\%}{100 - d\%}$$

Où :

Q représente la quantité de produit d'inertage à épandre en kilogramme par mètre carré,
e représente l'épaisseur du substrat à traiter en mètre,
$\rho_d$ représente la densité sèche du substrat,
d représente le dosage de produit d'inertage déterminée à l'étape précédente en pourcentage ;

i. Epandre sur le substrat à traiter la quantité Q de produit d'inertage selon l'invention ;

j. Malaxer in situ le produit d'inertage selon l'invention et le substrat ;

k. Niveler et compacter le mélange substrat/produit d'inertage ;

l. Appliquer sur le mélange substrat/produit d'inertage nivelé et compacté une substance imperméabilisante empêchant l'évaporation.

D'autres caractéristiques et avantages de l'invention ressortiront à la lecture de la description qui suit, de modes de mise en oeuvre particulier et non limitatif de l'invention.

## BREVE DESCRIPTION DES DESSINS

Il sera fait référence aux figures annexées, parmi lesquels :

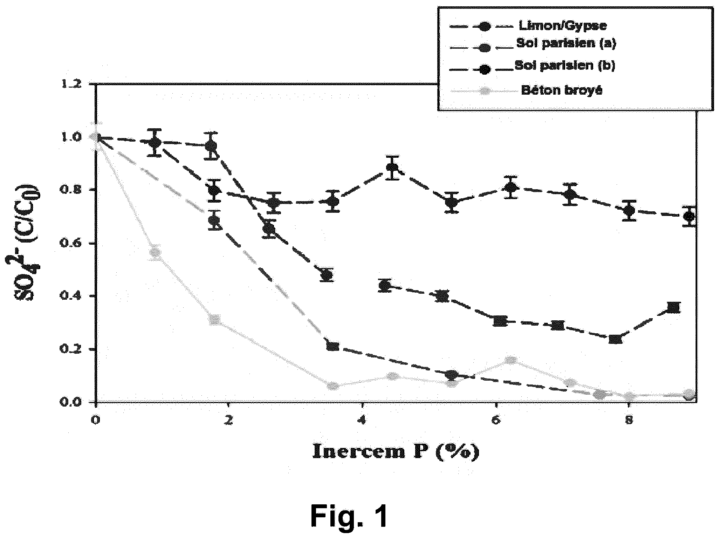

[Fig. 1] la figure 1 est un diagramme présentant la concentration de sulfates présente dans différents substrats selon la teneur en liant hydraulique géotechnique Inercem P ajouté auxdits substrats. La teneur optimale en liant hydraulique géotechnique quel que soit le substrat analysé est comprise entre 3% et 5% en masse.

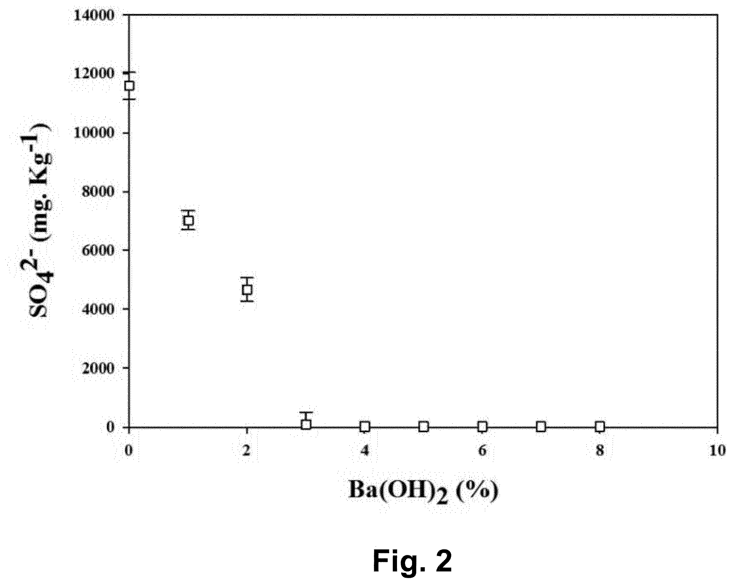

[Fig. 2] la figure 2 est un diagramme présentant la concentration de sulfates dans le substrat « sol parisien (a) » selon la teneur en $Ba(OH)_2$ exprimée en pourcentage de masse du substrat. La teneur optimale en additif $Ba(OH)_2$ est de 3% en masse par rapport au substrat.

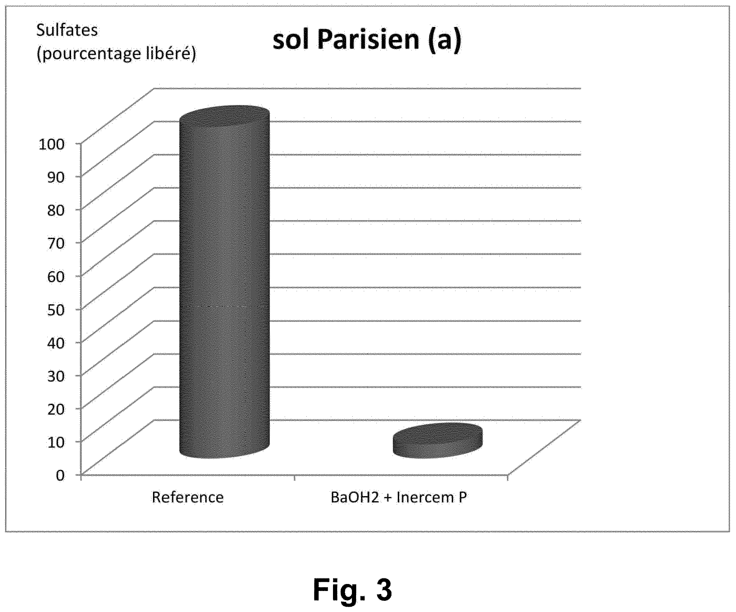

[Fig. 3] la figure 3 est un diagramme présentant la quantité de sulfates solubles (ou lixiviables) présents dans un substrat de référence, identifié sous le nom « sol parisien a » non traité, comparé à la quantité de sulfates solubles (ou lixiviables) présents dans ce même substrat traité avec le produit d'inertage objet de l'invention à raison de 5% en masse de substrat de liant hydraulique géotechnique Inercem P et 3% en masse de substrat d'hydroxyde de baryum ($BaOH_2$). Le traitement avec le produit d'inertage objet de l'invention permet de réduire la quantité de sulfates solubles disponibles de 10756,3 mg par kilogramme de substrat non traité à moins de 500 mg par kilogramme de substrat traité.

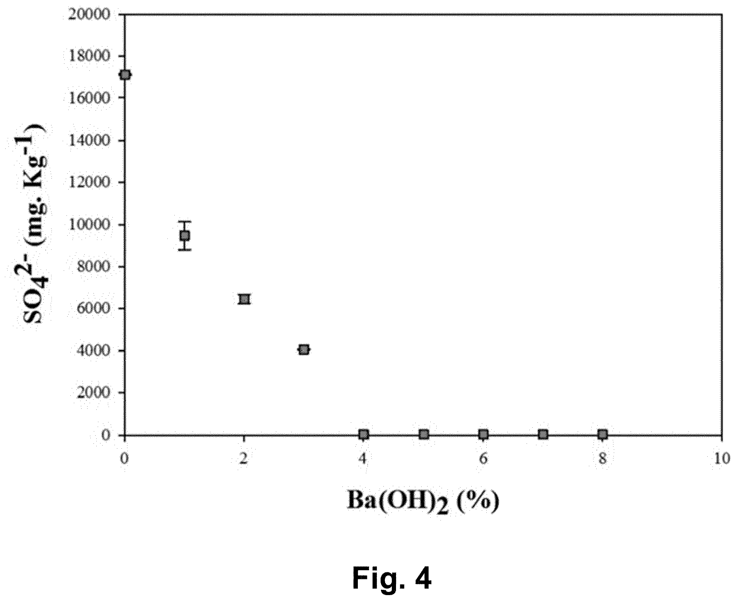

[Fig. 4] la figure 4 est un diagramme présentant la concentration de sulfates dans le substrat « sol parisien (b) » selon la teneur en $Ba(OH)_2$ exprimée en pourcentage de masse du substrat. La teneur optimale en additif $Ba(OH)_2$ est de 3%.

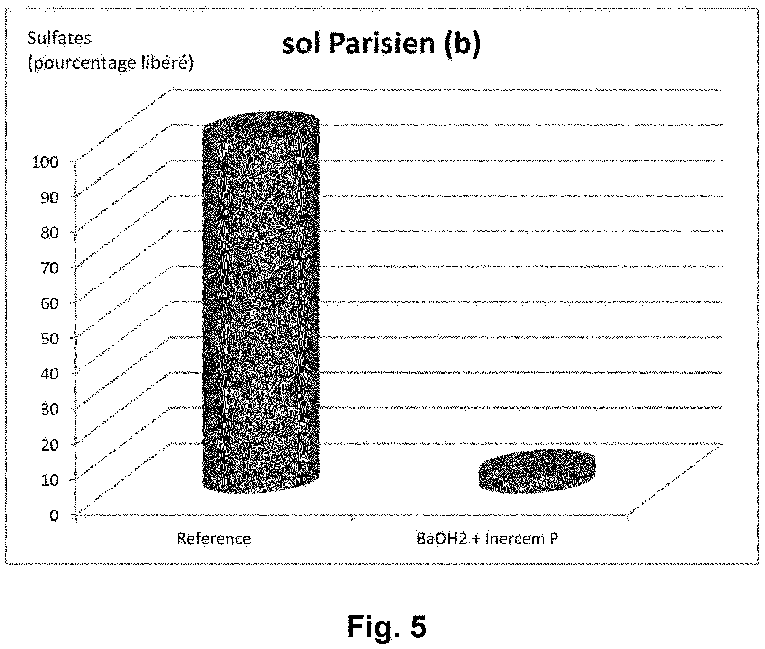

[Fig. 5] la figure 5 est un diagramme présentant la quantité de sulfates solubles (ou lixiviables) présents dans un deuxième substrat de référence, identifié sous le nom de « sol parisien b » non traité, comparé à la quantité de sulfates solubles (ou lixiviables) présents dans ce même substrat traité avec le produit d'inertage objet de l'invention à raison de 5% en masse de substrat de liant hydraulique Inercem P et 3% en masse de substrat d'hydroxyde de baryum ($BaOH_2$). Le traitement avec le produit d'inertage objet de l'invention permet de réduire la quantité de sulfates solubles (ou lixiviables) disponibles de 14756 mg par kilogramme de substrat non traité à environ 600 mg par kilogramme de substrat traité.

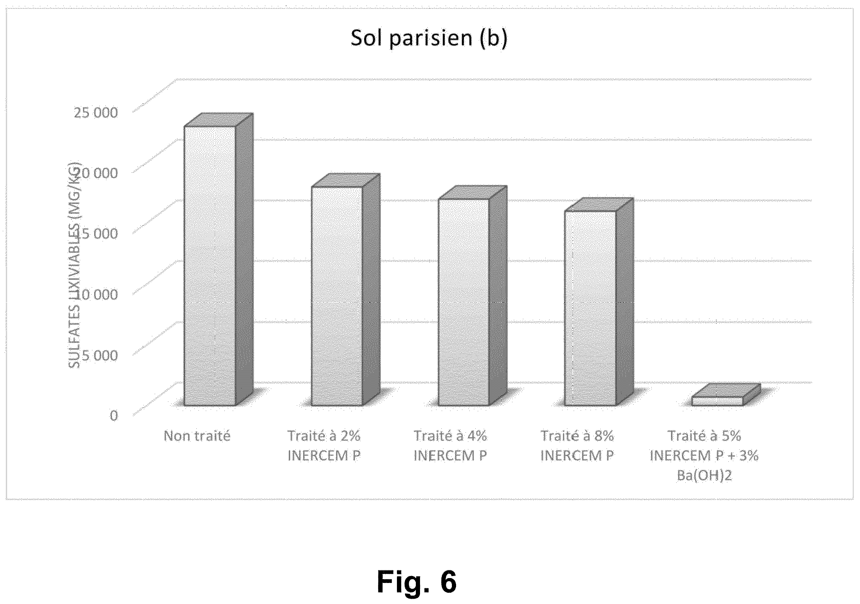

[Fig.6] La figure 6 est un histogramme décrivant la quantité de sulfates lixiviables (ou solubles) du sol parisien (b) après traitement au liant hydraulique seul et traitement avec le produit d'inertage de l'invention. Le sol parisien (b) non traité présente une quantité de sulfates lixiviables (ou solubles) de 23 000 mg/kg de substrat. Lorsque le sol parisien (b) est traité avec du liant hydraulique seul, à hauteur 2%, la quantité de sulfates lixiviables est de 18 000mg/kg, à hauteur de 4%, la quantité de sulfates lixiviables est de 17 000 mg/kg et à hauteur de 8%, la quantité de sulfates lixiviables est de 16 000 mg/kg. Enfin, l'application du produit d'inertage (5% de liant hydraulique Inercem P et 3% d'hydroxyde de baryum par rapport à la masse totale de substrat traitée) sur le substrat permet d'obtenir une quantité de sulfates lixiviables de 700 mg/kg.

## DESCRIPTION DETAILLEE DE L'INVENTION

Selon un mode de réalisation particulier de l'invention le produit de génie civil pour l'inertage de substrats, comprend un liant hydraulique géotechnique et un additif de sels de baryum ou d'aluminium dans des proportions comprises entre 5 et 50% en masse dudit produit.

On entend par « substrat » tous sols ou déchets minéraux non inertes pollués en sulfates, et ce quelle que soit la nature géologique du sol. A titre d'exemples non limitatifs, ce peut être des sols ou des déchets minéraux issus de chantiers d'excavation tels que des terres excavées, des boues de tunneliers, des sédiments de dragage, des matériaux de déconstruction ou de démolition, des cendres volantes.

On entend par « inertage », le processus qui consiste à enrober ou piéger une substance polluante, ici les ions sulfates ($SO4^{2-}$) par un liant hydraulique géotechnique pour en empêcher la dissémination dans l'environnement.

On entend par « liant hydraulique géotechnique » ou « liant hydraulique d'inertage », toute matière minérale finement broyée qui réagit avec l'eau pour former une pâte qui fait prise et durcit en présence d'eau pour inerter le substrat traité. En particulier, dans la présente invention le terme « liant hydraulique géotechnique » ou « liant hydraulique d'inertage » couvre tout liant hydraulique d'inertage comprenant du Clinker (Portland).

On entend par « sels de baryum » ou « sels d'aluminium » des composés minéraux tels que les chlorures de baryum ou d'aluminium (respectivement $BaCl_2$, $AlCl_3$) hydratés ou non, les hydroxydes de baryum ou d'aluminium (respectivement $Ba(OH)_2$, $Al(OH)_3$), le carbonate de baryum ($BaCO_3$), qu'ils soient purifiés, synthétisés ou présents naturellement sous forme de whiterite ou barytine pour les sels de baryum ou de bauxite pour les sels d'aluminium. On utilisera indifféremment dans la suite du texte le terme « lixiviables » ou « solubles ». Les sulfates sont considérés comme solubles ou lixiviables lorsqu'ils ne sont pas inerter, autrement dit piéger par le produit d'inertage de l'invention. Selon un mode de réalisation privilégié de l'invention, on élabore le produit de génie civil pour l'inertage de substrats en mélangeant à un liant hydraulique géotechnique, entre 3 et 50% de sels de baryum ou d'aluminium par rapport à la masse totale du produit.

En particulier, le liant hydraulique géotechnique utilisé dans le produit d'inertage comprend au moins 15% de Clinker (Portland) . De préférence, il comprend au moins 20%, au moins 30%, au moins 40%, au moins 50% de Clinker (Portland) et de manière tout à fait préférentielle au moins 65% de Clinker (Portland). A titre d'illustration, le liant hydraulique géotechnique entrant dans le produit d'inertage objet de l'invention peut être analogue aux liants hydrauliques géotechniques commercialisés par la société EQIOM sous la marque Inercem P. La présence de liant hydraulique géotechnique dans le produit d'inertage de l'invention a pour objectif de stabiliser/solidifier le substrat permettant l'obtention d'un solide massif ou granulaire ayant pour objectifs :

- de réduire le risque de dissémination des polluants, principalement en les immobilisant sous forme moins soluble et moins toxique ;
- de réduire la surface de contact entre le matériau stabilisé, si ledit matériau stabilisé est sous forme monolithique, et le milieu extérieur afin de limiter les transferts de polluants ;
- de conférer des propriétés physico-chimico-mécaniques spécifiques aux substrats à traiter de manière à faciliter leur maniabilité, leur stockage, ou plus généralement à assurer leur compatibilité avec un cahier des charges technique établi en fonction d'un usage particulier (par exemple : traitement in situ en stockage ou traitement en vue d'une réutilisation en technique routière).

Outre le liant hydraulique géotechnique, le produit d'inertage objet de l'invention comprend également des sels de baryum. Ceux-ci sont ajoutés au liant hydraulique géotechnique sous forme pulvérulente de telle sorte que la teneur en sels de baryum représente entre 3 et 50% en masse du produit d'inertage objet de l'invention. De manière privilégiée, le sel de baryum employé dans le produit d'inertage de l'invention pourra être de l'hydroxyde de baryum, commercialisé en tant que tel sous forme purifié ou présent dans des sources naturelles. Les ions $Ba^{2+}$ pourront également être apportés via un autre matériau minéral qui aura été préalablement préparé, par exemple, certaines argiles qui présentent des capacités d'échange cationiques élevées.

Le mélange du liant hydraulique géotechnique sous forme de poudre et des sels de baryum également sous forme de poudre peut être réalisé via une installation de mélange. Le procédé utilisé pour la fabrication du produit d'inertage est un procédé classique connu en tant que tel de l'homme du métier.

La teneur en sels de baryum du produit d'inertage objet de l'invention est déterminée en fonction d'une part du substrat à traiter (plus le substrat est pollué en sulfates, plus la teneur en sels de baryum du produit sera élevée) et en fonction du coût de production et donc du coût de commercialisation du produit d'inertage objet de l'invention. L'homme du métier saura déterminer la teneur optimale en sels de baryum du produit d'inertage en fonction de ces deux critères.

Le produit d'inertage selon l'invention est alors conditionnée sous forme pulvérulente en sac, en bigbags, ou livrée en vrac. L'inertage des ions sulfates d'un substrat pollué est réalisé en ajoutant audit substrat le produit d'inertage objet de l'invention, à proportion de 5 à 10% en masse du substrat à traiter. Le substrat et le produit d'inertage sont mélangés selon les procédés habituels connus en tant que tels par l'homme du métier.

Le procédé s'applique particulièrement au traitement de substrats pollués destinés à être inertés et stockés in situ. Dans une première étape, on évalue la quantité de sulfates lixiviables du substrat à traiter par des essais de lixiviation permettant de mesurer la quantité de polluants, notamment de sulfates, relargables dans un contexte contrôlé (eau déminéralisée, pH neutre, rapport liquide/solide de 10L/kg par exemple avec un temps d'agitation de 24h). La concentration (ou teneur) en sulfates exprimée en milligrammes de sulfates lixiviables par kilogramme de matière sèche de substrat à traiter(mg/kg) peut être mesurée par spectrométrie d'émission atomique de l'échantillon ou tout autre technique bien connue de l'homme de métier. Dans une deuxième étape on établit une gamme d'échantillons constitué d'un mélange homogène de substrat à traiter et de produit d'inertage. La gamme d'échantillons s'échelonne de 5% de produit d'inertage par rapport à la masse de substrat à traiter à 10% de produit d'inertage par rapport à la masse de substrat à traiter. Les mêmes essais de lixiviation sont alors réalisés sur chaque échantillon de la gamme. Ces quatre premières étapes permettent de déterminer la quantité de produit d'inertage nécessaire au traitement du substrat à traiter pour être compatible avec une valeur de référence de quantité de sulfates lixiviables acceptable. Cette valeur de référence est définie par une norme, actuellement les normes en vigueur sont notamment les normes NFEN 12457-2 ou 12457-4, ou déterminée par cahier des charges.

Ces étapes permettent à l'homme de métier de déterminer de manière optimale la nature du liant hydraulique géotechnique et la teneur en sels de baryum à utiliser pour le produit d'inertage objet de l'invention destinée à traiter les substrats en question ainsi que la quantité de produit d'inertage nécessaire au traitement in situ du substrat pour atteindre une teneur en sulfates lixiviables définie par la norme en vigueur ou déterminée dans le cahier des charges. Une fois déterminée la quantité de produit d'inertage nécessaire au traitement du substrat, celui-ci est ajouté au substrat au moyen d'un malaxeur qui permet à la fois de mélanger substrat et produit d'inertage et d'homogénéiser ce mélange avant stockage dans des alvéoles, par exemple. Le mélange homogène peut être également obtenu via une installation de type centrale de malaxage ou via un épandage au sol du produit d'inertage directement sur le substrat suivi d'un malaxage avec un matériel de type stabilisateur de sols. L'homme du métier saura déterminer les temps et vitesses de malaxage selon les caractéristiques du substrat, la technique employée, et les conditions environnementales, notamment les conditions météorologiques, du lieu de stockage.

Une fois le mélange réalisé et de manière facultative, la quantité de sulfates lixiviables du substrat traité est vérifié sur un échantillon. Le substrat ainsi inerté par le produit d'inertage de l'invention est stocké sans risque de relargage des ions sulfates dans les eaux de lixiviation et donc de pollution de l'environnement. Le substrat pourra également être ré-employé en tant que remblai.

Outre le procédé pour inerter des substrats in situ, l'invention concerne également un procédé pour formuler des substrats destinés à être utilisés en technique routière.

Ce procédé comprend une première étape d'évaluation de la quantité de sulaftes lixiviables du substrat à traiter par essais de lixiviation. Dans une deuxième étape et comme cela est déjà décrit dans l'étape correspondante du procédé de traitement de substrat pollué in situ , on établit une gamme d'échantillons sur laquelle des essais de lixiviation sont réalisés. Ces essais permettent de déterminer dans une quatrième étape le dosage d1 de produit d'inertage objet de l'invention nécessaire au traitement du substrat de sorte à réduire la quantité de sulfates lixiviables pour atteindre une valeur de référence. Le dosage d1 est exprimé en pourcentage de masse de matière sèche de substrat à traiter. La valeur de référence est définie réglementairement, actuellement par l'arrêté en vigueur pour l'admission des déchets dans les installations de stockage de déchets inertes ou par cahier des charges. Dans une cinquième étape, on effectue sur la gamme d'échantillons des tests de performances mécaniques. Ces tests permettent de déterminer le dosage d2 de produit d'inertage objet de l'invention (en pourcentage de masse de substrat à traiter) nécessaire au traitement du substrat afin d'obtenir les performances mécaniques attendues sur le substrat pour son usage en technique routière. La valeur d est ensuite déterminée. La valeur d est égale au dosage permettant d'atteindre à la fois les objectifs en terme de lixiviation de sulfates et de performances mécaniques. Ainsi, cette valeur d est égale à la plus élevée des valeurs parmi d1 et d2 précédemment obtenues. Ainsi, d=d1 si d1>d2 et d=d2 si d1<d2.

Dans une huitième étape, on calcule la quantité de produit d'inertage à épandre selon la formule suivante :

$$Q(kg/m^2) = e(m) \times \rho_d(t/m^3) \times \frac{1000 \times d\%}{100 - d\%}$$

Où :

    o Q représente la quantité de produit d'inertage selon l'invention à épandre en kilogramme par mètre carré ;
    ◦ e représente l'épaisseur du substrat à traiter en mètre ;
    ◦ $\rho_d$ représente la densité sèche du substrat ;
    ◦ d représente le dosage de produit selon l'invention en pourcentage.

La quantité Q de produit d'inertage ainsi déterminée est épandue sur le substrat par exemple à l'aide d'un épandeur. L'homme du métier est à même de déterminer les réglages de vitesses et de débit pour que le produit d'inertage soit épandu de manière régulière et homogène sur l'ensemble du substrat.

Le produit d'inertage ainsi épandu est malaxé avec le substrat à l'aide d'un pulvimixeur ce qui permet d'obtenir un mélange homogène substrat/produit d'inertage.

La couche substrat/produit d'inertage est ensuite nivelée puis compactée dans une dixième étape. L'homme du métier saura réalisé ces opérations de nivelage et compactage conformément aux règles de l'art, bien connues en tant que telles.

Enfin, une dernière étape consiste à appliquer une couche imperméabilisante de sorte à maintenir le taux d'hydratation initial du substrat. A titre d'exemple, cette couche imperméabilisante peut être réalisée par la mise en oeuvre d'un enduit monocouche ou bicouche comprenant une émulsion de bitume et des gravillons adaptés de coupures granulométriques 4/6 mm et/ou 6/10 mm.

Les exemples ci-après illustrent l'efficacité du produit d'inertage de l'invention appliquée sur différents substrats.

Exemple 1 : Traitement d'un premier substrat identifié par la référence « sol parisien (a) » par le produit d'inertage.

Le produit d'inertage utilisé ici comprend du liant hydraulique géotechnique Inercem P et de l'hydroxyde de baryum (BaOH2).

1.1 Caractérisation géotechnique du sol parisien (a)

Les analyses minéralogiques sont réalisées par spectrométrie de fluorescence au rayon X (XRF) et par spectrométrie par diffraction de rayons X.

La spectrométrie de fluorescence au rayon X est réalisée avec un spectromètre Brucker S4 Pioneer à fluorescence au rayon X avec une longueur d'onde dispersive de 4 kW, équipé d'une anode au rhodium. Les mesures sont réalisées à 60keV et 40mA sur des tablettes d'échantillons en poudre compactée. L'évaluation sans standard intégré de la machine permet une détermination semi-quantitative des concentrations des éléments, inférieures à une partie par million, rapide et facile sans procéder à une calibration.

La spectrométrie par diffraction de rayons X est réalisée sur des poudres minéralogiques micronisées, obtenues par broyage (mortier/pilon en agate), grâce à un système de diffractomètre Brucker D8 Advance, utilisant des rayonnements Co-Ka équipé d'un détecteur à sensibilité rapide de position LynxEye (WL=1,54,060). Le diffractomètre est utilisé à 35kV et 40 mA. Les scans sont réalisés de 5° à 80°2Θ, avec un intervalle de progression de 0,02°2Θ et un temps d'acquisition de 96 secondes par progression. L'identification des minéraux est réalisée par le logiciel Brucker-AXS DiffracPlus EVA et la base de données Powder Diffraction File 2015 du Centre International pour les Données de diffraction (ICDD).

Afin de confirmer et valider les données minéralogiques obtenues en DRX, on utilise la thermogravimétrie comme méthode additionnelle et indépendante pour identifier et quantifier les phases pyrolysables. Les analyses sont conduites avec un analyseur thermique Netzsch STZ 449F3 Jupiter, configuré avec une augmentation des températures de 3°C/min de 40°C à 1000°C sous flux d'argon.

Après analyses, le sol parisien (a) est constitué majoritairement de silicates (quartz), carbonates (calcite), sulfures métalliques (carlinite (Feroan clinochore), abite, microcline et des composés argileux tels que la nontronite, montmorillonite. Il comprend 4,28% de matières organiques.

1.2 Caractéristique du produit d'inertage

Le produit d'inertage utilisé comprend du liant hydraulique géotechnique Inercem P, comprenant au moins 65% de Clinker (Portland) et de l'hydroxyde de baryum ($BaOH_2$) comme additif. Afin de déterminer la composition optimale du produit d'inertage, le liant hydraulique géotechnique Inercem P et l'hydroxyde de baryum sont appliqués indépendamment sur le sol parisien (a).

La figure 1 montre que la teneur en sulfates du sol parisien (a) est fortement réduite à partir de 3 à 5% en masse de substrat de liant hydraulique géotechnique Inercem P, seul.

Il est à noter que les teneurs en sulfates des différents substrats ont été normalisés pour les rendre comparables.

Le liant hydraulique géotechnique Inercem P, de part sa composition riche en calcium (concentration de 43,3%), piège les ions sulfates sous forme d'ettringite.

La figure 2 montre l'efficacité de l'hydroxyde de baryum seul pour le piégeage des sulfates dans le sol parisien (a) à partir d'une teneur entre 2% et 3% en masse de substrat.

Ainsi, la composition optimale retenue pour le produit d'inertage de l'invention pour traiter le substrat « sol parisien (a) » est de 3% d'hydroxyde de baryum et 5% de liant hydraulique géotechnique Inercem P par rapport à la masse totale de substrat traitée.

Comme le montre la figure 3, le traitement avec le produit d'inertage objet de l'invention permet de réduire la quantité de sulfates solubles disponibles de 10756,3 mg par kilogramme de substrat non traité à moins de 500 mg par kilogramme de substrat traité.

Le sol parisien (a) après inertage est constitué majoritairement de silicates (quartz), carbonates (calcite), sulfures métalliques (carlinite (Feroan clinochore), abite, portlandite, microcline, d'oxyde d'aluminium calcium et d'ettringite. Exemple 2 : Traitement par le produit d'inertage des sulfates contenus dans un substrat identifié par la référence « sol parisien (b) ».

Le produit d'inertage comprend du liant hydraulique géotechnique Inercem P et de l'hydroxyde de baryum (BaOH2)comme additif.

2.1 Caractérisation géotechnique du sol parisien (b)

La méthodologie de caractérisation géotechnique du sol parisien (b) est la même que celle utilisée pour caractériser le sol parisien (a).

Les analyse montrent que le sol parisien (b) est constitué majoritairement de quartz, de calcite, nontronite, nitride de vanadium et contient 0,67% de matière organique.

La figure 1 montre que le liant hydraulique géotechnique Inercem P seul a une efficacité de piégeage des sulfates dans le sol parisien (b) limitée. L'efficacité relative est obtenue dès 3 à 6% en masse de liant hydraulique géotechnique Inercem P. L'augmentation de la concentration du liant hydraulique géotechnique Inercem P à des teneurs supérieures à 6% n'améliore pas le piégeage des sulfates.

Le graphe de la figure 4 montre l'efficacité de l'hydroxyde de baryum seul pour le piégeage des sulfates dans le sol parisien (b) à partir d'une teneur entre 2% et 3% en masse de substrat. Ainsi, la composition optimale retenue pour le produit d'inertage de l'invention pour traiter le substrat « sol parisien (b) » est identique à celle retenue pour « le sol parisien (a) » : 5% de liant hydraulique géotechnique Inercem P et 3% d'hydroxyde de baryum par rapport à la masse totale de substrat traité, alors même que les compositions des sols parisiens (a) et (b) sont différentes. Ceci montre le caractère générique du produit d'inertage de l'invention.

Comme le montre la figure 5, le traitement avec le produit d'inertage objet de l'invention permet de réduire la quantité de sulfates solubles disponibles de 14756 mg par kilogramme de substrat non traité à 660 mg par kilogramme de substrat traité. Le sol parisien (b) après inertage est constitué majoritairement de silicates (quartz), carbonates (calcite), sulfures de silicium, nontronite, ettringite, chalcopyrite, barite.

La figure 6 présente sous forme d'histogramme les résultats d'essais déterminant la quantité de sulfates lixiviable du sol parisien (b) après traitement au liant hydraulique géotechnique seul et traitement au produit d'inertage de l'invention. Le sol parisien (b) non traité présente une quantité de sulfates lixiviables de 23 000 mg/kg de substrat. Lorsque le sol parisien (b) est traité avec du liant hydraulique géotechnique seul, à hauteur 2%, la quantité de sulfates lixiviables est de 18 000mg/kg, à hauteur de 4%, la quantité de sulfates lixiviables est de 17 000 mg/kg et à hauteur de 8%, la quantité de sulfates lixiviables est de 16 000 mg/kg. Enfin, l'application du produit d'inertage (5% de liant hydraulique géotechnique Inercem P et 3% d'hydroxyde de baryum par rapport à la masse totale de substrat traitée) sur le substrat permet d'obtenir une quantité de sulfates lixiviables de 700 mg/kg. La figure 6 montre clairement l'efficacité d'inertage du produit d'inertage de l'invention par rapport à un liant hydraulique géotechnique seul. La quantité de sulfates lixiviables du sol parisen (b) traité par le produit d'inertage est plus de 200 fois inférieur à la quantité de sulfates lixiviables du même sol traité par du liant hydraulique géotechnique (Inercem P) seul.

Ainsi, malgré les compositions très différentes des échantillons de substrats sol parisien (a) / sol parisien (b), le produit d'inertage objet de l'invention montre une efficacité d'inertage des sulfates très importante, à la fois en terme de quantité de sulfates piégés et en terme de forme de piégeage (ettringite, barite) très stable qui en empêche le relargage au cours du temps, et ce à une concentration en masse par rapport au substrat économiquement viable car peu élevée (de l'ordre de 5%) ainsi qu'une teneur en sels de baryum acceptable économiquement. Bien entendu, l'invention n'est pas limitée au mode de réalisation décrit mais englobe toutes variantes entrant dans le champ de l'invention telle que définie par les revendications. En particulier, le produit d'inertage décrit comprend du liant hydraulique géotechnique et un additif, mais il peut également comprendre en outre d'autres composés tels qu'à titre d'exemples non limitatifs des colorants, ou des excipients.

En particulier, le produit d'inertage appliquée comprend un liant hydraulique géotechnique composé de Clinker (Portland), ici avec du laitier de haut fourneau mais le liant hydraulique géotechnqiue peut aussi être composé de Clinker (Portland) et d'autres substances telles que par exemple des cendres volantes. En particulier, l'additif utilisé dans le produit d'inertage objet de l'invention est constitué par des sels de baryum, mais il peut également être utilisés des sels d'aluminium comme additifs.

En particulier, le produit d'inertage appliqué comprend le liant hydraulique géotechnique et l'additif mais le liant hydraulique géotechnique et l'additif peuvent être ajoutés au substrat indépendamment l'un de l'autre et successivement.

## Revendications

1. Produit de génie civil d'inertage de substrats comprenant au moins :

   - un liant hydraulique géotechnique et,
   - un additif de sels de baryum ou d'aluminium dans des proportions comprises entre 5 et 50% en masse dudit produit.

2. Produit selon la revendication 1 dans lequel le liant hydraulique est composé d'au moins 15% de Clinker (Portland).

3. Produit selon la revendication 2 dans lequel le liant hydraulique géotechnique est composé d'au moins 40% de Clinker (Portland).

4. Produit selon la revendication 3 dans lequel le liant hydraulique géotechnique est composé d'au moins 65% de Clinker (Portland).

5. Produit selon les revendications 1 à 4 dans lequel l'additif est constitué par des sels de baryum.

6. Procédé d'inertage de substrat pollué par piégeage des ions sulfates, dans lequel le produit d'inertage selon les revendications 1 à 5 est mélangé au substrat à traiter à proportion de 5 à 10% en masse de substrat à traiter.

**7.** Procédé selon la revendication 6, dans lequel le substrat à inerter est destiné à être stocké et dépollué in situ, comprenant les étapes de :

a. Evaluer la quantité de sulfates lixiviables du substrat à traiter par essais de lixiviation ;

b. Etablir une gamme d'échantillons, chaque échantillon étant constitué d'un mélange homogène substrat à traiter / produit d'inertage avec une proportion de produit d'inertage entre 5 et 10% en masse du substrat à traiter selon les échantillons ;

c. Effectuer des tests de lixiviation sur cette gamme d'échantillons ;

d. Déterminer la quantité de produit d'inertage selon les revendications 1 à 5 nécessaire au traitement du substrat en fonction des résultats obtenus à l'étape c pour être compatible avec une valeur de référence de quantité de sulfates lixiviables ;

e. Mélanger de manière homogène la quantité de produit d'inertage déterminée à l'étape d au substrat à traiter.

**8.** Procédé selon la revendication 6, le substrat à inerter étant utilisé en technique routière comprenant les étapes de :

a. Evaluer la quantité de sulfates lixiviables du substrat à traiter par essais de lixiviation ;

b. Etablir une gamme d'échantillons, chaque échantillon étant constitué d'un mélange homogène substrat à traiter / produit d'inertage avec une proportion de produit d'inertage comprise entre 5 et 10% en masse du substrat à traiter selon les échantillons ;

c. Effectuer des tests de lixiviation sur cette gamme d'échantillons ;

d. Déterminer le dosage d1 de produit d'inertage nécessaire au traitement du substrat afin de réduire la quantité de sulfates lixiviables pour atteindre une valeur de référence de quantité de sulfates lixiviables, ladite valeur de référence étant définie par une norme ou déterminée par cahier des charges ;

e. Effectuer des tests de performances mécaniques sur cette même gamme d'échantillons ;

f. Déterminer le dosage d2 de produit d'inertage nécessaire au traitement du substrat afin d'obtenir les performances mécaniques attendues ;

g. Déterminer la valeur d selon les formules suivantes :

d=d1 si d1>d2

d=d2 si d1<d2 ;

h. Calculer la quantité à épandre Q de produit d'inertage selon les revendications 1 à 5, selon la formule suivante :

$$Q(kg/m^2) = e(m) \times \rho_d(t/m^3) \times \frac{1000 \times d\%}{100 - d\%}$$

Où :

Q représente la quantité de produit d'inertage à épandre en kilogramme par mètre carré,

e représente l'épaisseur du substrat à traiter en mètre,

$\rho_d$ représente la densité sèche du substrat,

d représente le dosage de produit d'inertage en pourcentage ;

i. Epandre sur le substrat à traiter la quantité Q de produit d'inertage ;

j. Malaxer in situ le produit d'inertage selon les revendications 1 à 5 et le substrat ;

k. Niveler et compacter le mélange substrat/produit d'inertage ;

l. Appliquer sur le mélange substrat/produit d'inertage nivelé et compacté une substance imperméabilisante empêchant l'évaporation.

Fig. 1

**Fig. 2**

**Fig. 3**

Fig. 4

**Fig. 5**

Fig. 6

EP 4 205 872 A1

Europäisches
Patentamt

European
Patent Office

Office européen
des brevets

## RAPPORT DE RECHERCHE EUROPEENNE

Numéro de la demande

**EP 22 21 6321**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | CARMONA-QUIROGA P.M. ET AL: "Use of barium carbonate to inhibit sulfate attack in cements", CEMENT AND CONCRETE RESEARCH., vol. 69, 1 mars 2015 (2015-03-01), pages 96-104, XP055945275, US ISSN: 0008-8846, DOI: 10.1016/j.cemconres.2014.12.006 | 1-6 | INV. B09B3/70 B09B3/27 ADD. B09B101/90 |
| A | * le document en entier * ----- | 7,8 | |
| X | EP 0 414 303 A1 (SNAM PROGETTI [IT]) 27 février 1991 (1991-02-27) | 1,6 | |
| A | * pages 2,4; figure 1; exemples * ----- | 7,8 | |
| X | EP 2 617 692 B1 (HEIDELBERGCEMENT AG [DE]) 21 mars 2018 (2018-03-21) * alinéas [0001] – [0007], [0065], [0066]; exemple 4; tableaux 3,4 * ----- | 1 | |

DOMAINES TECHNIQUES
RECHERCHES (IPC)

B09B
B09C

Le présent rapport a été établi pour toutes les revendications

| Lieu de la recherche | Date d'achèvement de la recherche | Examinateur |
|---|---|---|
| Munich | 15 mai 2023 | Tassinari, Francesca |

EPO FORM 1503 03.82 (P04C02)

## ANNEXE AU RAPPORT DE RECHERCHE EUROPEENNE
## RELATIF A LA DEMANDE DE BREVET EUROPEEN NO.

**EP 22 21 6321**

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**15-05-2023**

| Document brevet cité au rapport de recherche | | Date de publication | Membre(s) de la famille de brevet(s) | | Date de publication |
|---|---|---|---|---|---|
| EP 0414303 | A1 | 27-02-1991 | EG | 19022 A | 29-09-1994 |
| | | | EP | 0414303 A1 | 27-02-1991 |
| | | | IT | 1231732 B | 21-12-1991 |
| | | | PT | 95095 A | 18-04-1991 |
| | | | YU | 161490 A | 20-07-1992 |
| EP 2617692 | B1 | 21-03-2018 | AUCUN | | |

Pour tout renseignement concernant cette annexe : voir Journal Officiel de l'Office européen des brevets, No.12/82

EPO FORM P0460

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2990431 A

- FR 3056930 A

**Littérature non-brevet citée dans la description**

- alorisation d'un sol urbain dans le domaine routier: Mobilité des polluants dans les sols traités et/ou compactés.-. **BELLAGH K.** Géotechnique. Université Paris-Est, 2017
- **COLAS J.** Etude de la valorisation des déblais de chantiers de tunnels en granulats et béton. Université Paris-Est, 2012

- **TRINCAL et al.** se of hydraulic binders for reducing sulphate leaching : application to gypsiferous soil sampled in Ile-de-France region (France). *Environmental Science and Pollution Research,* 2018, vol. 25, 22977-22997